# EUROPÄISCHE PATENTSCHRIFT

(11) **EP 2 356 172 B1**
(45) Veröffentlichungstag und Bekanntmachung des Hinweises auf die Patenterteilung: **03.10.2012**
(21) Anmeldenummer: 09764208.6
(22) Anmeldetag: 28.10.2009
(51) Int. Cl.: C08J 5/00, C08L 77/00, C08L 77/10, B60N 2/06, B60N 2/18, B60N 2/16, B60N 2/44, C08G 69/26, C08L 79/08

(54) **VERWENDUNG EINER POLYAMID ZUSAMMENSETZUNG ZUR HERSTELLUNG EINER VERSTELLVORRICHTUNG EINES KRAFTFAHRZEUGS**
USE OF A POLYAMIDE COMPOSITION FOR PRODUCING AN ADJUSTING DEVICE OF A MOTOR VEHICLE
UTILIZATION D'UNE COMPOSITION DE POLYAMIDE POUR LA FABRICATION D'UN DISPOSITIF DE RÉGLAGE D'UN VÉHICULE AUTOMOBILE

(30) Priorität: 10.11.2008 DE 102008057240
(43) Veröffentlichungstag der Anmeldung: 17.08.2011
(73) Patentinhaber: Brose Fahrzeugteile GmbH & Co. KG, Hallstadt, 96103 Hallstadt (DE)
(72) Erfinder: WACHTER, Wolfgang, 96328 Küps (DE); TAUBMANN, Udo, 96476 Bad Rodach-Sülzfeld (DE)
(74) Vertreter: Schröder, Christoph
(86) Internationale Anmeldenummer: PCT/EP2009/064210
(87) Internationale Veröffentlichungsnummer: WO 2010/052160

(56) Entgegenhaltungen:
- US-A- 4 410 661
- US-A- 5 387 645
- US-A- 5 436 294
- M. KAISSER: "Die nächste Generation Polyphthalamide" KUNSTSTOFFE, Bd. 8, 2008, Seiten 111-113, XP001539957 Hanser verlag, München

## Beschreibung

Die Erfindung betrifft die Verwendung einer Zusammensetzung zur Herstellung mindestens eines Teils einer Verstellvorrichtung eines Kraftfahrzeugs sowie eine Verstellvorrichtung zum Verstellen eines Verstellteils eines Kraftfahrzeugs.

Teile einer Verstellvorrichtung eines Kraftfahrzeugs, insbesondere solche Teile, die im Betrieb der Verstellvorrichtung auf Reibung beansprucht sind, unterliegen hohen Anforderungen hinsichtlich ihrer mechanischen, insbesondere tribologischen Eigenschaften. Dies betrifft beispielsweise
- Getrieberäder der Verstellvorrichtung, die in andere Getriebeteile zur Kraftübertragung eingreifen und sich im Betrieb der Verstellvorrichtung relativ zu anderen Teilen bewegen,
- Führungselemente, beispielsweise Führungsschienen eines Fensterhebers oder einer Sitzverstellung, zur Führung von Teilen der Verstellvorrichtung und
- Gleitelemente, beispielsweise geführte Mitnehmer eines Fensterhebers, Führungsstege einer Sitzverstellung oder dergleichen.

Heutzutage werden derartige Teile einer Verstellvorrichtung vor allem aus Kostengründen bevorzugt aus Kunststoff hergestellt. Dabei ist jedoch zu beachten, dass die Teile über einen vergleichsweise großen Temperaturbereich - entsprechend dem Betriebstemperaturbereich der Verstellvorrichtung von beispielsweise -40°C bis 120°C - hinreichend gute mechanische Eigenschaften aufweisen und einen reibungs- und verschleißarmen Betrieb der Verstellvorrichtung auch bei hohen Betriebstemperaturen gewährleisten müssen.

Herkömmlich werden zur Herstellung von Teilen einer Verstellvorrichtung beispielsweise Polyacetale, auch als Polyoxymethylen (POM) bezeichnet, oder Polyetheretherketone (PEEK) verwendet. Polyacetale sind kostengünstig, weisen jedoch den Nachteil eines ausgeprägt temperaturabhängigen viskoelastischen Verhaltens auf, das bei erhöhten Temperaturen zu einer Verschlechterung der mechanischen Eigenschaften der hergestellten Teile führt. Polyetheretherketone, die hochtemperaturbeständige thermoplastische Kunststoffe darstellen, weisen über einen großen Temperaturbereich nahezu gleich bleibend gute mechanische Eigenschaften auf, sind jedoch sehr teuer.

Aufgabe der vorliegenden Erfindung ist es, eine Verwendung einer Zusammensetzung zur Herstellung mindestens eines Teils einer Verstellvorrichtung und eine Verstellvorrichtung bereitzustellen, die eine kostengünstige Herstellung der Teile der Verstellvorrichtung bei für den Betrieb der Verstellvorrichtung hinreichenden mechanischen Eigenschaften ermöglichen.

Diese Aufgabe wird durch einen Gegenstand mit den Merkmalen des Anspruchs gelöst.

Dabei wird eine Zusammensetzung enthaltend ein teilkristallines, teilaromatisches Polyamid zur Herstellung mindestens eines Teils einer Verstellvorrichtung eines Kraftfahrzeugs verwendet, wobei die Zusammensetzung schlagzähmodifiziert ist durch Zugabe mindestens eines Elastomers mit einem Mengenanteil von 1 % bis 10% in der Zusammensetzung.

Die Erfindung geht von dem Gedanken aus, eine Zusammensetzung zur Herstellung von Teilen einer Verstellvorrichtung zu verwenden, die zum einen kostengünstig und zum anderen über einen großen Temperaturbereich (beispielsweise -40°C bis 120°C) hinreichend gute mechanische Eigenschaften aufweist, so dass insbesondere bei hohen Betriebstemperaturen um und jenseits von beispielsweise 90°C die einwandfreie Funktion der Verstellvorrichtung gewährleistet ist. Hierzu wird zur Herstellung insbesondere von im Betrieb der Verstellvorrichtung beanspruchten Teilen ein teilkristallines, teilaromatisches Polyamid verwendet, das eine hohe Festigkeit auch bei auftretenden hohen Betriebstemperaturen aufweist.

Unter einem teilkristallinen Polyamid wird ein Polyamid verstanden, das beim Abkühlen aus der Schmelze kristalline Domänen (Phasenübergang 1. Ordnung) bildet. Dabei erstarrt nicht die gesamte Schmelze kristallin, sondern es bilden sich auch amorphe Domänen. Das Verhältnis zwischen kristallinen und amorphen Domänen wird von der chemischen Natur des Polyamids und den Abkühlbedingungen bestimmt, wobei zusätzlich die Kristallisation durch nukleierende oder antinukleierende Additive gefördert oder behindert werden kann. Zu den leicht kristallisierenden Polyamiden gehören beispielsweise das so genannte PA 46 oder das PA 66, zu den schwer kristallisierenden Polyamiden das so genannte PA mXD6 aus m-Xylylendiamin und Adipinsäure oder bestimmte Copolyamide.

Unter einem teilaromatischen Polyamid wird ein Polyamid verstanden, dessen Monomere sich zum Teil von aromatischen Grundkörpern ableiten, z. B. ein Polyamid aus Hexamethylendiamin und Terephthalsäure (PA 6T).

Vorzugsweise ist das teilkristalline, teilaromatische Polyamid auf Basis von Hexamethylendiamin und zusätzlich Terephtalsäure hergestellt. Darüber hinaus können weitere verschiedene Co-Monomere in dem Polyamid enthalten sein.

Ein Beispiel für eine derartige Zusammensetzung ist das Polyamid PA6T/XT. Die Verwendung des Polyamids PA6T/XT ermöglicht eine Zusammensetzung, die eine hohe Festigkeit auch bei hohen Temperaturen, eine hohe Formbeständigkeitstemperatur, eine niedrige Wasserabsorptionsrate, einen niedrigen Verschleiß, eine niedrige Reibung und eine gute chemische Widerstandsfähigkeit aufweist. Die Verwendung dieses Polyamids hat den weiteren Vorteil, dass aufgrund einer vergleichsweise hohen Kristallisations- und Aushärtgeschwindigkeit kurze Verarbeitungszyklen bei der Herstellung der Teile der Verstellvorrichtung möglich werden.

Das teilkristalline, teilaromatische Polyamid kann beispielsweise einen Mengenanteil (in Gewichtsprozent) von 80% bis 100%, insbesondere 80% bis 90% oder 90% bis 100% in der Zusammensetzung aufweisen.

Zusätzlich werden, um einen schlägzähmodifizierten Werkstoff zu erhalten, Elastomere mit einem Mengenanteil von 1% bis 10% der Zusammensetzung zugegeben. Als Schlagzähmodifikatoren können allgemein Verbindungen aus der Gruppe der Sulfonsäureamide, Acrylamide, Harnstoffderivate wie Hydroxyethylethylenharnstoff, Monoether mehrwertiger C₁₋C₂₀-Alkohole, Polytrimethyolpropanadipinat, Lactate, Lactame sowie Polyamide, Lactone sowie deren Polymere, Kohlenhydrate wie Stärke, Aminosorbit, Hydroxyethylglycoside, anorganische und organische Sulfite und Hydroxymethylsulfonate, Polyesterpolyole, Ethylen-Vinylacetat-Kohlenmonoxid-Copolymere, Polyacrylate, Polyvinylalkohol, Polyvinylacetate, amino- oder hydroxylgruppen-terminierte Polysiloxan-Blockcopolymere, Bariumsulfate und/oder gefällte Calciumcarbonate, bevorzugt Polyvinylbutyrale, mit funktionellen Gruppen terminierte Butadien-Homopolymere und/oder Acrylnitril-Butadien-Copolymere, eingesetzt werden. Das Wirkprinzip der Schlagzähmodifikatoren besteht in deren Fähigkeit, im Material verlaufende Mikrorisse zu stoppen. Eine Vorrausetzung dafür ist eine homogene Verteilung in der Formmasse, die eine Aufnahme der eintretenden Schlagenergie ermöglicht. Vorwiegend kommen als Schlagzähmodifikatoren Elastomere, beispielsweise EPR, EPDM, NR, SEBS, PIB, PE-VLD oder thermoplastische Elastomere auf Metallocenbasis zum Einsatz. Wichtig ist, dass die Schlagzähmodifikatoren entweder eine Verträglichkeit teilweise bis hin zur chemischen Kopplung durch koordinative Bindungen mit der Zusammensetzung oder eine separate Phase ähnlich einem interpenetrierenden Netzwerk aufweisen.

In einer vorteilhaften Variante ist die Zusammensetzung zusätzlich durch die Zugabe von Polytetrafluorethylen (PTFE) mit einem Mengenanteil von 1 % bis 10% in der Zusammensetzung tribologisch modifiziert. Durch die tribologische Modifizierung weisen die mit der Zusammensetzung hergestellten Teile vorteilhafte Gleiteigenschaften auf und ermöglichen einen besonders reibungs- und verschleißarmen Betrieb der Verstellvorrichtung.

Die Verwendung eines teilkristallinen, teilaromatischen Polyamids ermöglicht die Herstellung von Teilen einer Verstellvorrichtung, die über einen großen Temperaturbereich, beispielsweise -40°C bis 120°C, hinreichend gute mechanische Eigenschaften aufweisen und die insbesondere auch bei hohen Betriebstemperaturen die an die Verstellvorrichtung gestellten Festigkeitsanforderungen erfüllen. Eine zusätzliche Verstärkung, beispielsweise eine Faserverstärkung durch Glas- oder Kohlefasern, ist nicht erforderlich. Die Verwendung einer nicht faserverstärkten Zusammensetzung hat den weiteren Vorteil, dass die Zusammensetzung eine im Wesentlichen isotrope Schwindung beim Auskühlen nach den Formung aufweist und der Verzug in den hergestellten Teilen daher minimiert ist. Zudem weisen die hergestellten Teile eine erhöhte Bindenahtfestigkeit im Vergleich zu faserverstärkten Werkstücken auf.

Die Zusammensetzung enthaltend das teilkristalline, teilaromatische Polyamid weist vorteilhafterweise einen Glaspunkt oberhalb von 115°C und in einem Temperaturbereich von -40°C bis 120°C ein Schubmodul von mindestens 650MPa auf. Als Glaspunkt wird der Temperaturpunkt bezeichnet, bei dem sich feste - erstarrte - amorphe Faserbereiche in einen viskoelastischen - leicht verformbaren Zustand umzuwandeln beginnen. Oberhalb des Glaspunkts nimmt das Schubmodul drastisch ab, so dass aus der Zusammensetzung hergestellte Werkstücke nicht bei Temperaturen oberhalb des Glaspunkts eingesetzt werden sollten.

Die vorangehend geschilderte Zusammensetzung kann insbesondere zur Herstellung von Getrieberädern eines Getriebes der Verstellvorrichtung, von Führungselementen der Verstellvorrichtung und/oder von Gleitelementen der Verstellvorrichtung verwendet werden. Zudem können auch andere Teile, insbesondere Gehäuseteile aus der beschriebenen Zusammensetzung gefertigt werden und weisen im Betrieb der Verstellvorrichtung insbesondere bei hohen Betriebstemperaturen vorteilhafte mechanische Eigenschaften auf.

Die Aufgabe wird zudem durch eine Verstellvorrichtung zum Verstellen eines Verstellteils eines Kraftfahrzeugs gelöst, bei der mindestens ein Getrieberad eines Getriebes, ein Führungselement und/oder ein Gleitelement aus einer Zusammensetzung enthaltend ein teilkristallines, teilaromatisches Polyamid hergestellt sind, wobei die Zusammensetzung schlagzähmodifiziert ist durch Zugabe mindestens eines Elastomers mit einem Mengenanteil von 1% bis 10% in der Zusammensetzung.

Der der Erfindung zugrunde liegende Gedanke soll nachfolgend anhand der in den Figuren dargestellten Ausführungsbeispiele und der Tabellen näher erläutert werden. Es zeigen:
- Fig.1: eine Ansicht einer als Sonnenrolloantrieb ausgebildeten Verstellvorrichtung;
- Fig. 2: eine freigeschnittene Ansicht der Verstellvorrichtung gemäß Fig. 1;
- Fig. 3: eine vergrößerte Ansicht eines Getriebes der Verstellvorrichtung;
- Fig. 4: eine Explosionsdarstellung des Getriebes der Verstellvorrichtung;
- Fig. 5: eine weitere Explosionsdarstellung der Verstellvorrichtung;
- Fig. 6: eine Ansicht eines Mitnehmers der Verstellvorrichtung in einer Führungsschiene und
- Fig. 7: eine graphische Darstellung der Verläufe des Schubmoduls unterschiedlicher Zusammensetzungen zur Herstellung mindestens eines Teils einer Verstellvorrichtung, in Abhängigkeit von der Temperatur.

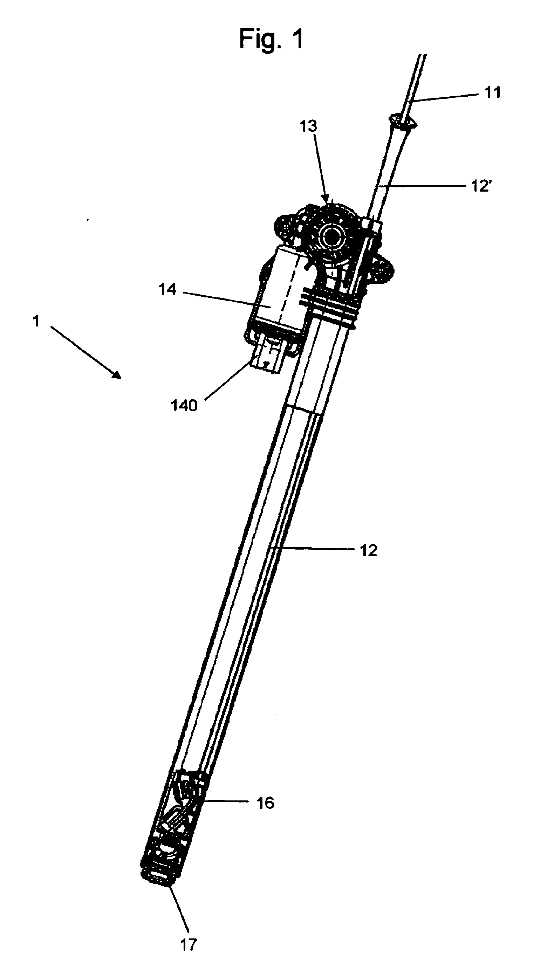

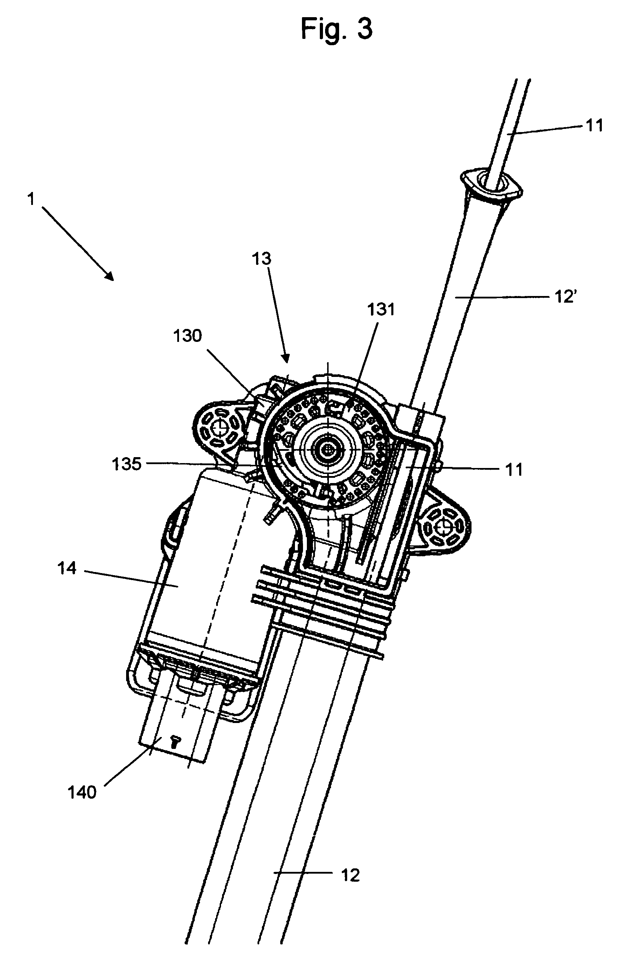

Fig. 1 bis 6 zeigen eine Ausführungsform einer als Sonnenrolloantrieb ausgebildeten Verstellvorrichtung 1 zur Montage an einer Fahrzeugtür. Die Verstellvorrichtung 1 kann mit einem entlang einer Fensterscheibe der Fahrzeugtür zu bewegenden Sonnenrollo verbunden werden und dient in an der Fahrzeugtür montiertem Zustand zum motorischen Verstellen des Sonnenrollos.

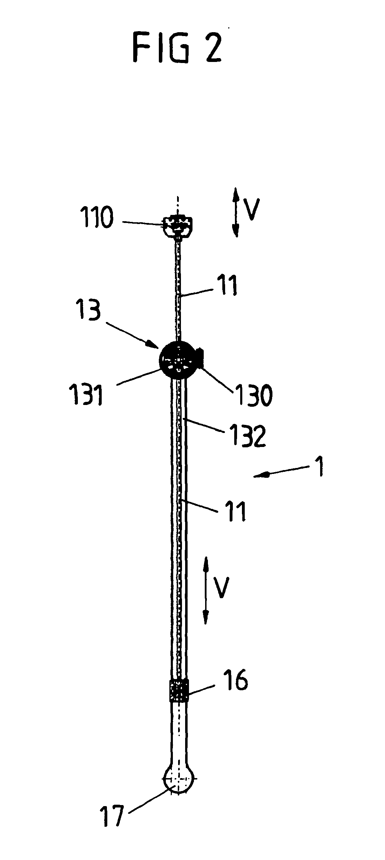

Die Verstellvorrichtung 1 ist nach Art eines einsträngigen Seilfensterhebers ausgebildet und ist in einer funktionalen Darstellung in Fig. 2 gezeigt. Die Verstellvorrichtung 1 weist eine Schubstange 11 auf, die über einen Mitnehmer 16 in einer sich entlang der Verstellrichtung V erstreckenden Längsführung 12 (siehe Fig. 1) geführt ist. Der Mitnehmer 16 ist mit einem Zugmittel 132 verbunden und über das Zugmittel 132 mit einem Getriebe 13 gekoppelt, das über eine Antriebsvorrichtung 14 angetrieben wird.

Das beispielsweise als Stahlseil ausgebildete Zugmittel 132 bildet eine geschlossene Seilschlaufe aus und erstreckt sich ausgehend von einer Seiltrommel 131 hin zu dem Mitnehmer 16, ist mit dem Mitnehmer 16 verbunden, erstreckt sich weiter zu einer Umlenkung 17 und von dort zurück zur Seiltrommel 131. Auf dem Rückweg wird das Zugmittel 132 gleitend entlang dem Mitnehmer 16 geführt, so dass der Mitnehmer 16 nur an einer Seite mit dem Zugmittel 132 verbunden ist und das Zugmittel 132 an der anderen Seite des Mitnehmers 16 entlang gleitet.

Die Seiltrommel 131 wird über eine mit dem Antriebsmotor 14 gekoppelte Antriebsschnecke 130 in untersetzter Weise angetrieben. Im Betrieb versetzt die Antriebsschnecke 130 die Seiltrommel 131 in eine Drehbewegung. Das-Zugmittel 132 wird hierdurch über sein eines Ende auf die Seiltrommel 131 aufgewickelt, während es über sein anderes Ende gleichzeitig von der Seiltrommel 131 abgewickelt wird, so dass sich die Länge der Seilschlaufe insgesamt nicht ändert, das Zugmittel 132 aber zusammen mit dem mit dem Zugmittel 132 verbundenen Mitnehmer 16 in der Längsführung 12 verschoben wird. Über den Mitnehmer 16 ist das Zugmittel 132 mit der Schubstange 11 verbunden, die somit zusammen mit dem Mitnehmer 16 ebenfalls verschoben und entlang der Verstellrichtung V aus der Längsführung 12 ausgefahren oder in die Längsführung 12 eingefahren wird.

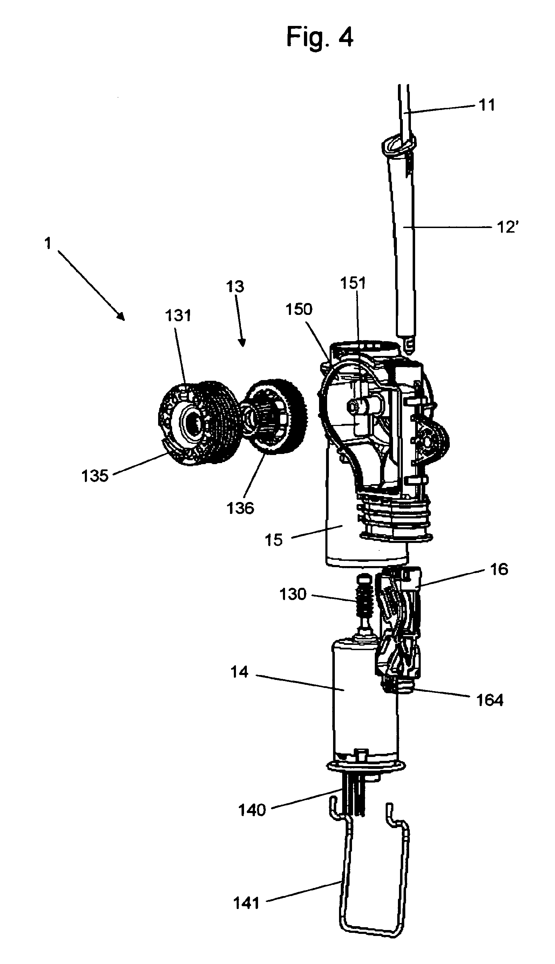

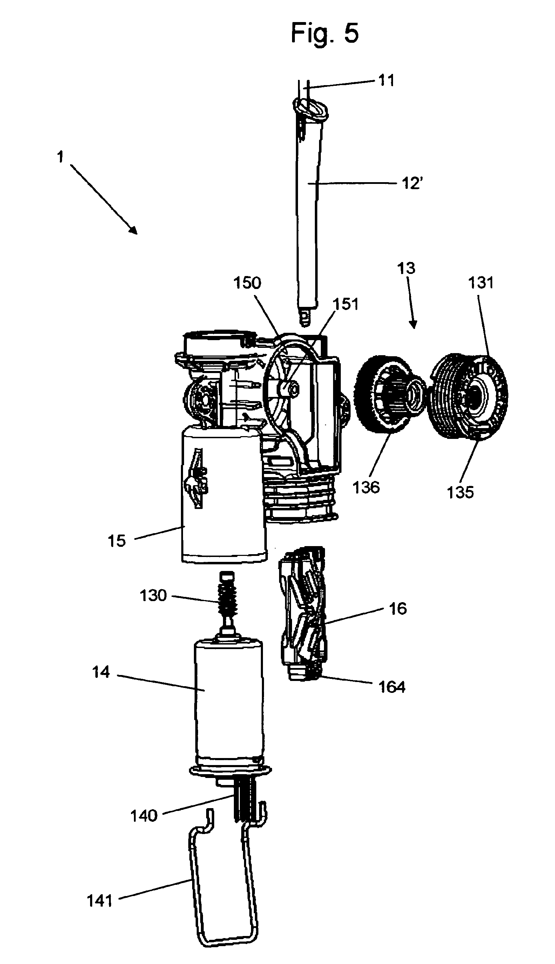

Der Antriebsmotor 14 steht über eine Antriebsschnecke 130 (siehe Fig. 4 und 5) mit einem Getrieberad 136 in Eingriff. Die Antriebsschnecke 130 weist hierzu an ihrem äußeren Umfang eine Schneckenverzahnung auf, die in eine Verzahnung am äußeren Umfang des Getrieberads 136 eingreift. Das Getrieberad 136 steht fest mit einer Seiltrommel 131 in Eingriff, so dass bei Antreiben des Getrieberads 136 die Seiltrommel 131 in eine Drehbewegung versetzt wird.

Der als Elektromotor ausgeführte Antriebsmotor 14 weist einen elektrischen Anschluss 140 auf, über den eine elektrische Versorgungsleitung mit dem Antriebsmotor 14 verbunden werden kann.

Die Seiltrommel 131 weist an ihrem äußeren Umfang Rillen zur Aufnahme des Zugmittels 132 auf.

Der Antriebsmotor 14, das Getrieberad 136 und die Seiltrommel 131 sind in einem Gehäuse 15 angeordnet, das eine zylindrische Aufnahme 150 zur Einfassung des Getrieberads 136 und der Seiltrommel 131 aufweist. Der Antriebsmotor 14 ist über eine Klammer 141 in dem Gehäuse 15 gehalten.

Die zylindrische Aufnahme 150 kann ausgebildet sein, mit ihrer inneren zylindrischen Fläche mit der Seiltrommel 131 derart zusammenzuwirken, dass das Zugmittel 132 im Betrieb der Verstellvorrichtung 1 in den Rillen zur Aufnahme des Zugmittels 132 an der Seiltrommel 131 gehalten ist und nicht aus den Rillen der Seiltrommel 131 gelangen kann.

In der zylindrischen Aufnahme 150 ist eine Achse 151 in Form eines Zapfens ausgebildet, auf die das Getrieberad 136 und die Seiltrommel 131 zur drehbaren Lagerung gesteckt sind.

Die Seiltrommel 131 weist zwei Aufnahmen 135 in Form von Nippelkammern auf, über die die Enden des Zugmittels 132 mit der Seiltrommel 131 verbunden werden können. Das Zugmittel 132 ist derart mit der Seiltrommel 131 verbunden, dass im Betrieb der Verstellvorrichtung 1 bei Drehung der Seiltrommel 131 ein Ende des Zugmittels 132 auf die Seiltrommel 131 aufgewickelt und gleichzeitig das andere Ende des Zugmittels 132 von der Seiltrommel 131 abgewickelt wird, so dass die vom Zugmittel 132 gebildete Seilschlaufe eine konstante Länge behält.

Das Zugmittel 132 (siehe Fig. 2) erstreckt sich von der Seiltrommel 131 in der Längsführung 12 hin zu der Umlenkung 17 und von der Umlenkung 17 zurück zur Seiltrommel 131 und ist dabei derart mit dem Mitnehmer 16 gekoppelt, dass eine Verschiebung des Zugmittels 132 infolge einer Drehbewegung der Seiltrommel 131 in eine Längsbewegung des Mitnehmers 16 entlang der Längsführung 12 umgesetzt wird. Der Mitnehmer 16 ist mit der Schubstange 11 gekoppelt, so dass durch Bewegen des Mitnehmers 16 die Schubstange 11 entlang der Längsführung 12 verstellbar ist.

Die Längsführung 12 ist an ihrem oberen, getriebeseitigen Ende mit einer zusätzlichen Längsführung 12' in Form eines zylindrischen Rohres verbunden, in dem die Schubstange 11 abschnittsweise geführt wird. Die zusätzliche Längsführung 12' dient insbesondere dazu, die Schubstange 11 durch ein Karosserieteil eines Fahrzeugs zu führen und darin abzustützen, wobei durch die separate Ausführung die Längsführung 12' getrennt von der Längsführung 12 montierbar ist und beispielsweise in eine Öffnung des Karosserieteils von außen eingeschoben und mit der Längsführung 12 rastend verbunden werden kann.

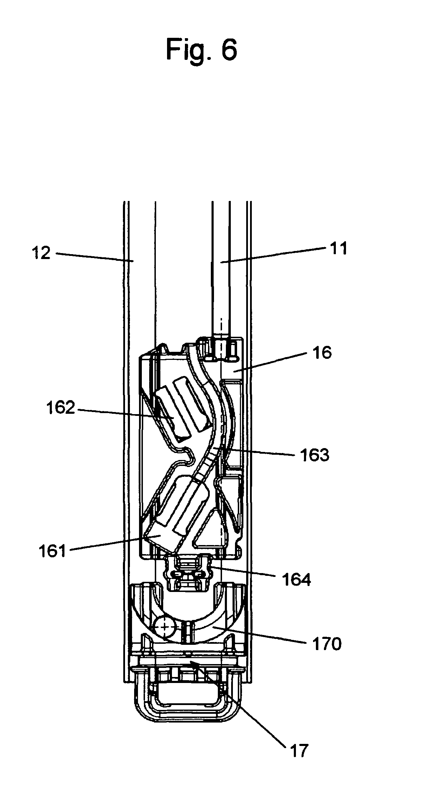

Eine Detailansicht des Mitnehmers 16 ist in Fig. 6 dargestellt. Der Mitnehmer 16 ist gleitend in der Längsführung 12 zwischen der Umlenkung 17 und dem Getriebe 13 geführt und weist Nippelkammern 161, 162 zur Verbindung des Zugmittels 132 mit dem Mitnehmer 16 auf. Das Zugmittel 132 wird hierbei in zu den Nippelkammern 161, 162 hinführende Längsführungen 163 eingelegt und über an den Seilenden des Zugmittels 132 angeordnete Nippel derart in den Nippelkammern 161, 162 aufgenommen, dass Zugkräfte auf den Mitnehmer 16 übertragen werden können.

An seinem unteren, der Umlenkung 17 zugewandten Ende weist der Mitnehmer 16 einen Zapfen 164 auf, der in eine entsprechende Aufnahme an der Umlenkung 17 eingefahren werden kann. Der Zapfen 164 defniert mit der Umlenkung 17 zusammen eine Anschlagposition bei eingefahrener Schubstange 11, in der der Mitnehmer 16 an das untere Ende der Längsführung 12 verfahren ist. Über den Zapfen 164 wird der Mitnehmer 16 rastend an der Umlenkung 17 gehalten, so dass die Schubstange 11 in dieser eingefahrenen Position festgelegt ist.

Die als einteiliges Umlenkstück ausgebildete Umlenkung 17 weist eine Seilführung 170 in Form eines halbkreisförmig gebogenen Rohrabschnitts zur umlenkenden Führung des Zugmittels 132 auf. Im Betrieb gleitet das Zugmittel 132 durch die Seilführung 170 und wird somit um 180° umgelenkt. Die Umlenkung 17 ist als Kunststoffteil ausgebildet und in die Längsführung 12 von unten eingesteckt.

Die anhand von Fig. 1 bis 6 vorangehend geschilderte Verstellvorrichtung 1 weist Teile auf, die vorteilhafterweise unter Verwendung einer Zusammensetzung enthaltend ein teilkristallines, teilaromatisches Polyamid, insbesondere PA6T/XT, hergestellt sind. Die Verwendung einer derartigen Zusammensetzung weist den Vorteil auf, dass daraus hergestellte Teile über einen großen Temperaturbereich, beispielsweise einen Betriebstemperaturbereich von -40°C bis 120°C, hinreichend gute mechanische Eigenschaften mit einer hohen Festigkeit aufweisen. Zu den Teilen, die vorteilhafterweise aus einer solchen Zusammensetzung hergestellt sind, gehören die Schubstange 11, die Längsführung 12, 12', die Antriebsschnecke 130, die Seiltrommel 131, die Aufnahme 135, das Getrieberad 136, das Gehäuse 15, der Mitnehmer 16 sowie die Umlenkung 17. Insbesondere sind solche Teile der Verstellvorrichtung 1 aus der Zusammensetzung enthaltend das teilkristalline, teilaromatische Polyamid hergestellt, die - wie die Antriebsschnecke 130 und das Getrieberad 136 - im Betrieb der Verstellvorrichtung 1 der Kraftübertragung dienen oder die - wie die Längsführung 12, 12' und der Mitnehmer 16 - aneinander gleitende Teile darstellen.

Die Zusammensetzung kann als Schlagzähmodifikatoren Elastomere und/oder als tribolorischen Modifikator zur Verbesserung der Gleiteigenschaften Polytetrafluorethylen (PTFE) enthalten.

Die Zusammensetzung enthaltend das teilkristalline, teilaromatische Polyamid ist vorteilhafterweise nicht zusätzlich verstärkt und enthält somit keine zusätzlichen Glas - oder Kohlefasern.

Ein erstes Beispiel einer Zusammensetzung enthält
- einen Mengenanteil (in Gewichtsprozent) von 96% bis 97% PA6T/XT und
- einen Mengenanteil von 3% bis 4% eines Schlagzähmodifikators.
Weitere Additive mit einem Mengenanteil von 0,1% bis 1 % können zugesetzt sein.

Ein zweites Beispiel einer Zusammensetzung enthält
- einen Mengenanteil von 87% bis 88% PA6T/XT,
- einen Mengenanteil von 3% bis 4% eines Schlagzähmodifikators und
- einen Mengenanteil von 8% bis 9% Polytetrafluorethylen (PTFE).

Zusätzlich können mit einem Mengenanteil von 0,1% bis 1 % weiterer Additive zugegeben werden.

Die mechanischen und thermischen Eigenschaften des ersten Beispiels der Zusammensetzung sind in nachfolgender Tabelle 1 aufgeführt.

**Tabelle 1:**

| **Mechanische Eigenschaften** | | | | | |
|---|---|---|---|---|---|
| | | Standard | Einheit | Zustand | Wert |
| Elastizitätsmodul | 1mm/min | ISO527 | MPa | trocken konditioniert | 250 0 |
| | | | | | 2800 |
| Zugkraft bei Bruch | 5mm/min | ISO527 | MPa | trocken konditioniert | 75 |
| | | | | | 75 |
| Dehnung bei Bruch | 5mm/min | ISO527 | % | trocken konditioniert | 3,5 |
| | | | | | 5,0 |
| Schlagfestigkeit | Charpy, 23°C | ISO179/1eU | kJ/m² | trocken konditioniert | 80 |
| | | | | | 80 |
| Kerbschlagfestigkeit | Charpy, 23°C | ISO179/1eA | kJ/m² | trocken konditioniert | 5,5 |
| | | | | | 7,0 |

| **Thermische Eigenschaften** | | | | | |
|---|---|---|---|---|---|
| Schmelzpunkt | DSC | ISO11357 | °C | trocken | 295 |
| Formbeständigkeitstemperatur H DT/A | 1,80MPa | ISO75 | °C | trocken | 110 |
| Formbeständigkeitstemperatur HDT/B | 0,45MPa | ISO75 | °C | trocken | 140 |

| **Allgemeine Eigenschaften** | | | | | |
|---|---|---|---|---|---|
| Dichte | | ISO1183 | g/cm³ | trocken | 1,13 |
| Wasserabsorption | 240h bei 95°C | ISO62 | % | | 2,7 |

Die mechanischen und thermischen Eigenschaften des zweiten Beispiels der Zusammensetzung gibt nachfolgende Tabelle 2 an.

**Tabelle 2:**

| **Mechanische Eigenschaften** | | | | | |
|---|---|---|---|---|---|
| | | Standard | Einheit | Zustand | Wert |
| Elastizitätsmodul | 1 mm/min | ISO527 | MPa | trocken konditioniert | 2500 |
| | | | | | 2800 |
| Zugkraft bei Bruch | 5mm/min | ISO527 | MPa | trocken konditioniert | 70 |
| | | | | | 60 |
| Dehnung bei Bruch | 5mm/min | ISO527 | % | trocken konditioniert | 3,0 |
| | | | | | 4,5 |
| Schlagfestigkeit | Charpy, 23°C | ISO179/1eU | kJ/m² | trocken konditioniert | 50 |
| | | | | | 50 |
| Kerbschlagfestigkeit | Charpy, 23°C | ISO179/1eA | kJ/m² | trocken konditioniert | 3 |
| | | | | | 4 |

| **Thermische Eigenschaften** | | | | | |
|---|---|---|---|---|---|
| Schmelzpunkt | DSC | ISO11357 | °C | trocken | 295 |
| Formbeständigkeitstemperatur HDT/A | 1,80MPa | ISO75 | °C | trocken | 110 |
| Formbeständigkeitstemperatur HDT/B | 0,45MPa | ISO75 | °C | trocken | 160 |

| **Allgemeine Eigenschaften** | | | | | |
|---|---|---|---|---|---|
| Dichte | | ISO1183 | g/cm³ | trocken | 1,19 |
| Wasserabsorption | 240h bei 95°C | ISO62 | % | | 2,4 |

Bei dem ersten Beispiel (Tabelle 1) handelt es sich um eine schlagzähmodifizierte Zusammensetzung. Bei dem zweiten Beispiel (Tabelle 2) handelt es sich um schlagzähmodifizierte und tribologisch modifizierte Zusammensetzung.

Beide Zusammensetzungen werden vorteilhafterweise in einem trockenen Zustand verarbeitet. Die Verarbeitungstemperatur der Schmelze sollte zwischen 305°C und 330°C liegen (der Schmelzpunkt des ersten und zweiten Beispiels der Zusammensetzung liegt bei jeweils 295°C). Die Formungstemperatur sollte wischen 115°C und 140°C liegen. Sowohl das erste Beispiel als auch das zweite Beispiel der Zusammensetzung weisen eine hohe Kristallisationsgeschwindigkeit auf und ermöglichen somit kurze Verarbeitungszeiten bei hoher Einspritzgeschwindigkeit beim Spritzgießen.

Die Verwendung der geschilderten Beispiele der Zusammensetzung ermöglicht die Herstellung der Teile der Verstellvorrichtung 1 in kostengünstiger Weise bei vorteilhaften mechanischen Eigenschaften der Teile über den erforderlichen Temperaturbereich von beispielsweise -40°C bis 120°C. Dadurch, dass die Zusammensetzung nicht faserverstärkt ist, ist die Schwindung näherungsweise isotrop, so dass der Verzug in den hergestellten Teilen minimal ist und die Teile zudem eine hohe Bindenahtfestigkeit im Vergleich zu faserverstärkten Werkstücken aufweisen.

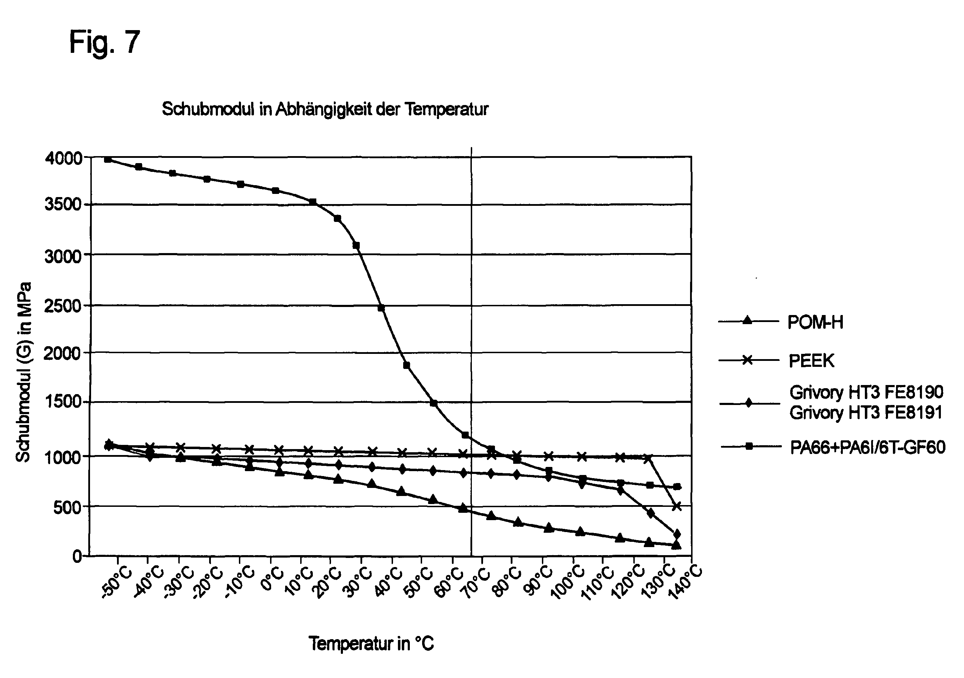

Fig. 7 zeigt die Temperaturabhängigkeit des Schubmoduls G (in MPa) für unterschiedliche Werkstoffe. Bei dem als POM-H bezeichneten Werkstoff handelt es sich um eine Zusammensetzung auf Basis eines Polyacetals. Der als PEEK bezeichnete Werkstoff stellt einen Werkstoff auf Basis eines Polyetheretherketons dar. Bei den Werkstoffen Grivory HT3 FE8190 und Grivory HT3 FE8191 handelt es sich um die Erfindung verwirklichende Zusammensetzungen gemäß dem oben genannten ersten bzw. dem zweiten Beispiel der Zusammensetzung. Der Werkstoff PA66+PA6I/6T-GF60 stellt einen faserverstärkten Werkstoff dar.

Wie aus Fig. 7 ersichtlich ist, weist der polyacetal-basierte Werkstoff POM-H ein viskoelastisches Verhalten mit sinkendem Schubmodul bei steigender Temperatur auf. Das Schubmodul des Werkstoffs POM-H bei niedrigen Temperaturen liegt im Bereich des Schubmoduls der anderen Werkstoffe, bei hohen Temperaturen jedoch deutlich unterhalb des Schubmoduls der anderen Werkstoffe.

Der Werkstoff PEEK weist über einen Bereich von -40°C bis 135°C ein nahezu konstantes Schubmodul zwischen 1000MPa und 1100MPa auf. Nachteil des Werkstoffs PEEK ist jedoch der im Vergleich zu den übrigen Werkstoffen hohe Preis.

Die die Erfindung verwirklichenden Werkstoffe Grivory HT3 FE8190 und Grivory HT3 FE8191 weisen über einen Temperaturbereich von -40°C bis ca. 120°C ein sich nur geringfügig änderndes Schubmodul zwischen 1000MPa und 750MPa auf. Das Schubmodul liegt zwar leicht unter dem Schubmodul des Werkstoffs PEEK. Die Festigkeit der Werkstoffe Grivory HT3 FE8190 und Grivory HT3 FE8191 ist jedoch hinreichend bei einem Preis, der deutlich unter dem von PEEK liegt.

Sowohl der Werkstoff PEEK als auch die Werkstoffe Grivory HT3 FE8190 und Grivory HT3 FE8191 weisen einen so genannten Glaspunkt auf, der bei 135°C bzw. 125°C liegt. Bei Temperaturen oberhalb des Glaspunkts fällt das Schubmodul drastisch ab, so dass aus diesen Werkstoffen gefertigte Teile nicht bei Temperaturen höher als die Temperatur des Glaspunkts eingesetzt werden sollten. Der Glaspunkt des PEEK und des Grivory HT3 FE8190 bzw. Grivory HT3 FE8191 liegt jedoch jeweils oberhalb des normal bei einer Verstelleinrichtung 1 auftretenden Betriebstemperaturbereichs.

In Fig. 7 ist zudem das Schubmodul des faserverstärkten Werkstoffs PA66+PA6I/6T-GF60 eingezeichnet, das bei niedrigen Temperaturen erheblich über dem Schubmodul des PEEK und des Grivory HT3 FE8190 bzw. Grivory HT3 FE8191 liegt.

Die anhand von Fig. 1 bis 6 geschilderte Verstellvorrichtung 1 ist vorliegend lediglich beispielhaft für die Verwendung von aus einer Zusammensetzung enthaltend ein teilkristallines, teilaromatisches Polyamid gefertigten Teilen zu verstehen. Aus einer solchen Zusammensetzung gefertigte Teile, insbesondere Getrieberäder, Führungselemente, Führungsschienen und Gleitelemente, können grundlegend bei unterschiedlichen Verstellvorrichtungen eines Fahrzeugs, insbesondere bei einem Fensterheber, einer Sitzlängsverstellung, einer Sitzhöhenverstellung, einer Sitzneigungsverstellung, einer Kofferraumabdeckung, einer Schiebedachabdeckung, einem Gurtversteller und dergleichen eingesetzt werden. Grundsätzlich kann die geschilderte Zusammensetzung bei allen Verstellvorrichtungen eingesetzt werden, deren Teile über einen vergleichsweise großen Temperaturbereich bestimmte Festigkeitsanforderungen erfüllen müssen.

### Bezugszeichenliste

- 1: Verstellvorrichtung
- 11: Schubstange
- 110: Kopplungselement
- 12, 12': Längsführung
- 13: Getriebe
- 130: Antriebschnecke
- 131: Seiltrommel
- 132: Zugmittel
- 135: Aufnahme
- 136: Getrieberad
- 14: Antriebsmotor
- 140: Elektrischer Anschluss
- 141: Klammer
- 15: Gehäuse
- 150: Aufnahme
- 151: Achse
- 16: Mitnehmer
- 161, 162: Nippelkammer
- 163: Seilführung
- 164: Zapfen
- 17: Umlenkung
- 170: Seilführung
- V: Verstellrichtung

## Patentansprüche

1. Verwendung einer Zusammensetzung enthaltend ein teilkristallines, teilaromatisches Polyamid zur Herstellung mindestens eines Teils einer Verstellvorrichtung (1) eines Kraftfahrzeugs, wobei die Zusammensetzung schlagzähmodifiziert ist durch Zugabe mindestens eines Elastomers mit einem Mengenanteil von 1% bis 10% in der Zusammensetzung.

2. Verwendung nach Anspruch 1, **dadurch gekennzeichnet, dass** das teilkristalline, teilaromatische Polyamid Hexamethylendiamin enthält.

3. Verwendung nach Anspruch 1 oder 2, **dadurch gekennzeichnet, dass** das teilkristalline, teilaromatische Polyamid Terephtalsäure enthält.

4. Verwendung nach einem der Ansprüche 1 bis 3, **dadurch gekennzeichnet, dass** das teilkristalline, teilaromatische Polyamid mindestens ein Co-Monomer enthält.

5. Verwendung nach einem der vorangehenden Ansprüche, **dadurch gekennzeichnet, dass** das teilkristalline, teilaromatische Polyamid als PA6T/XT ausgebildet ist.

6. Verwendung nach einem der vorangehenden Ansprüche, **dadurch gekennzeichnet, dass** das teilkristalline, teilaromatische Polyamid einen Mengenanteil von 80% bis 100% in der Zusammensetzung aufweist.

7. Verwendung nach Anspruch 6, **dadurch gekennzeichnet, dass** das teilkristalline, teilaromatische Polyamid einen Mengenanteil von 80% bis 90% in der Zusammensetzung aufweist.

8. Verwendung nach Anspruch 6, **dadurch gekennzeichnet, dass** das teilkristalline, teilaromatische Polyamid einen Mengenanteil von 90% bis 100% in der Zusammensetzung aufweist.

9. Verwendung nach einem der vorangehenden Ansprüche, **dadurch gekennzeichnet, dass** die Zusammensetzung tribologisch modifiziert ist durch die Zugabe von Polytetrafluorethylen mit einem Mengenanteil von 1 % bis 10% in der Zusammensetzung.

10. Verwendung nach einem der vorangehenden Ansprüche, **dadurch gekennzeichnet, dass** die Zusammensetzung nicht zusätzlich faserverstärkt ist.

11. Verwendung nach einem der vorangehenden Ansprüche, **dadurch gekennzeichnet, dass** die Zusammensetzung enthaltend das teilkristalline, teilaromatische Polyamid einen Glaspunkt oberhalb von 115°C aufweist.

12. Verwendung nach einem der vorangehenden Ansprüche, **dadurch gekennzeichnet, dass** die Zusammensetzung enthaltend das teilkristalline, teilaromatische Polyamid in einem Temperaturbereich von -40°C bis 120°C ein Schubmodul von mindestens 650MPa aufweist.

13. Verwendung nach einem der vorangehenden Ansprüche zur Herstellung mindestens eines Getrieberads (130; 135; 136) eines Getriebes (13) der Verstellvorrichtung (1), eines Führungselements (32; 32'; 17) der Verstellvorrichtung (1) und/oder eines Gleitelements (11; 16) der Verstellvorrichtung (1).

14. Verstellvorrichtung zum Verstellen eines Verstellteils eines Kraftfahrzeugs, bei der mindestens ein Getrieberad (130; 135; 136) eines Getriebes (13), ein Führungselement (32; 32'; 17) und/oder ein Gleitelement (11; 16) aus einer Zusammensetzung enthaltend ein teilkristallines, teilaromatisches Polyamid hergestellt sind, wobei die Zusammensetzung schlagzähmodifiziert ist durch Zugabe mindestens eines Elastomers mit einem Mengenanteil von 1% bis 10% in der Zusammensetzung.

## Claims

1. Use of a composition containing a partly crystalline, partly aromatic polyamide for producing at least a part of an adjusting device (1) of a motor vehicle, wherein the composition is impact-modified by addition of at least one elastomer with a proportion of 1% to 10% in the composition.

2. The use according to claim 1, **characterized in that** the partly crystalline, partly aromatic polyamide contains hexamethylene diamine.

3. The use according to claim 1 or 2, **characterized in that** the partly crystalline, partly aromatic polyamide contains terephthalic acid.

4. The use according to any of claims 1 to 3, **characterized in that** the partly crystalline, partly aromatic polyamide contains at least one comonomer.

5. The use according to any of the preceding claims, **characterized in that** the partly crystalline, partly aromatic polyamide constitutes PA6T/XT.

6. The use according to any of the preceding claims, **characterized in that** the partly crystalline, partly aromatic polyamide has a proportion of 80% to 100% in the composition.

7. The use according to claim 6, **characterized in that** the partly crystalline, partly aromatic polyamide has a proportion of 80% to 90% in the composition.

8. The use according to claim 6, **characterized in that** the partly crystalline, partly aromatic polyamide has a proportion of 90% to 100% in the composition.

9. The use according to any of the preceding claims, **characterized in that** the composition is tribologically modified by adding polytetrafluoroethylene with a proportion of 1% to 10% in the composition.

10. The use according to any of the preceding claims, **characterized in that** the composition is not additionally fiber-reinforced.

11. The use according to any of the preceding claims, **characterized in that** the composition containing the partly crystalline, partly aromatic polyamide has a glass point above 115°C.

12. The use according to any of the preceding claims, **characterized in that** in a temperature range from -40°C to 120°C the composition containing the partly crystalline, partly aromatic polyamide has a shear modulus of at least 650 MPa.

13. The use according to any of the preceding claims for producing at least one gearwheel (130; 135; 136) of a transmission (13) of the adjusting device (1), a guide element (32; 32'; 17) of the adjusting device (1) and/or a sliding element (11; 16) of the adjusting device (1).

14. An adjusting device for adjusting an adjustable part of a motor vehicle, in which at least one gearwheel (130; 135; 136) of a transmission (13), a guide element (32; 32'; 17) and/or a sliding element (11; 16) are produced from a composition containing a partly crystalline, partly aromatic polyamide, wherein the composition is impact-modified by addition of at least one elastomer with a proportion of 1% to 10% in the composition.

## Revendications

1. Utilisation d'une composition renfermant un polyamide semi-cristallin, semi-aromatique, dédiée à la fabrication d'au moins une partie d'un dispositif (1) de réglage d'un véhicule automobile, ladite composition étant modifiée avec résistance élevée aux chocs, par adjonction d'au moins un élastomère représentant une quote part de 1 % à 10 % dans ladite composition.

2. Utilisation selon la revendication 1, **caractérisée par le fait que** le polyamide semi-cristallin, semi-aromatique, renferme de l'hexaméthylène-diamine.

3. Utilisation selon la revendication 1 ou 2, **caractérisée par le fait que** le polyamide semi-cristallin, semi-aromatique, renferme de l'acide téréphtalique.

4. Utilisation selon l'une des revendications 1 à 3, **caractérisée par le fait que** le polyamide semi-cristallin, semi-aromatique, renferme au moins un comonomère.

5. Utilisation selon l'une des revendications précédentes, **caractérisée par le fait que** le polyamide semi-cristallin, semi-aromatique, est de type PA6T/XT.

6. Utilisation selon l'une des revendications précédentes, **caractérisée par le fait que** le polyamide semi-cristallin, semi-aromatique, représente une quote part de 80 % à 100 % dans la composition.

7. Utilisation selon la revendication 6, **caractérisée par le fait que** le polyamide semi-cristallin, semi-aromatique, représente une quote part de 80 % à 90 % dans la composition.

8. Utilisation selon la revendication 6, **caractérisée par le fait que** le polyamide semi-cristallin, semi-aromatique, représente une quote part de 90 % à 100 % dans la composition.

9. Utilisation selon l'une des revendications précédentes, **caractérisée par le fait que** la composition subit une modification tribologique, par adjonction de polytétrafluoréthylène représentant une quote part de 1 % à 10 % dans ladite composition.

10. Utilisation selon l'une des revendications précédentes, **caractérisée par le fait que** la composition n'est pas additionnellement renforcée par des fibres.

11. Utilisation selon l'une des revendications précédentes, **caractérisée par le fait que** la composition renfermant le polyamide semi-cristallin, semi-aromatique, présente un point de vitrification au-delà de 115°C.

12. Utilisation selon l'une des revendications précédentes, **caractérisée par le fait que** la composition renfermant le polyamide semi-cristallin, semi-aromatique, présente un module de cisaillement d'au moins 650 MPa dans une plage de températures de -40 °C à 120 °C.

13. Utilisation selon l'une des revendications précédentes, dédiée à la fabrication d'au moins une roue d'engrenage (130 ; 135 ; 136) d'une transmission (13) du dispositif de réglage (1), d'un élément de guidage (32 ; 32' ; 17) dudit dispositif de réglage (1), et/ou d'un élément de glissement (11 ; 16) dudit dispositif de réglage (1).

14. Dispositif de réglage conçu pour régler un organe réglable d'un véhicule automobile, dans lequel au moins une roue d'engrenage (130 ; 135 ; 136) d'une transmission (13), un élément de guidage (32 ; 32' ; 17), et/ou un élément de glissement (11 ; 16), est(sont) fabriqué(e)(s) en une composition renfermant un polyamide semi-cristallin, semi-aromatique, ladite composition étant modifiée avec résistance élevée aux chocs, par adjonction d'au moins un élastomère représentant une quote part de 1 % à 10 % dans ladite composition.
